# EUROPEAN PATENT SPECIFICATION

(11) **EP 4 640 416 B1**
(45) Date of publication and mention of the grant of the patent: **17.06.2026**
(21) Application number: 24305653.8
(22) Date of filing: 26.04.2024
(51) Int. Cl.: B29D 11/00

(54) **METHOD FOR MANUFACTURING A MICRO-STRUCTURED OPTICAL ARTICLE**
VERFAHREN ZUR HERSTELLUNG EINES MIKROSTRUKTURIERTEN OPTISCHEN ARTIKELS
PROCÉDÉ DE FABRICATION D'UN ARTICLE OPTIQUE MICROSTRUCTURÉ

(43) Date of publication of application: 29.10.2025
(73) Proprietor: Essilor International, 94220 Charenton-Le-Pont (FR)
(72) Inventor: CHIU, Hao-Wen, 34685, FLORIDA (US)
(74) Representative: Plasseraud IP

(56) References cited:
- EP-A1- 4 194 188
- EP-A1- 4 194 932
- EP-A1- 4 197 764

## Description

### Technical field

This invention relates to a method for manufacturing a micro-structured optical article, such as a lens.

In particular, the present invention relates to a method for manufacturing an optical article with encapsulated microstructures, for myopia control.

### Background information and prior art

Ophthalmic lenses with microstructures, commonly microlenses, placed on a front surface to provide peripheral defocus of light impinging the retina of an eye of an individual have been shown to effectively slow down the progression of myopia in kids and teens. However, the presence of microstructures on the lens surface presents a significant challenge in the overall manufacturing of the lens.

In the following of the description reference will be made to a "lens", however, other known optical articles having microstructures on a surface (micro-structured optical articles) such as wafers or films can be considered.

Injection molding methods for manufacturing lenses with microstructures are known. The injection molding methods typically comprise the injection of a first optical thermoplastic material into a mold to obtain an optical thermoplastic wafer layer TP_{Wafer} (also referred as support layer) of uniform thickness and having microstructures on a surface.

The wafer layer TP_{Wafer} with microstructures can be produced by injection molding, roll-to-roll hot embossing or other means.

An encapsulation of the microstructures is then carried out by injecting, over the micro-structured surface of the wafer layer TP_{Wafer}, a different second optical thermoplastic material, to obtain a lens layer TP_{Lens} (also referred as body layer) forming the main body of the lens.

The resulting final lens is a two-layered composite lens having microstructures encapsulated at the interface between the wafer layer TP_{Wafer} and the lens layer TP_{Lens}.

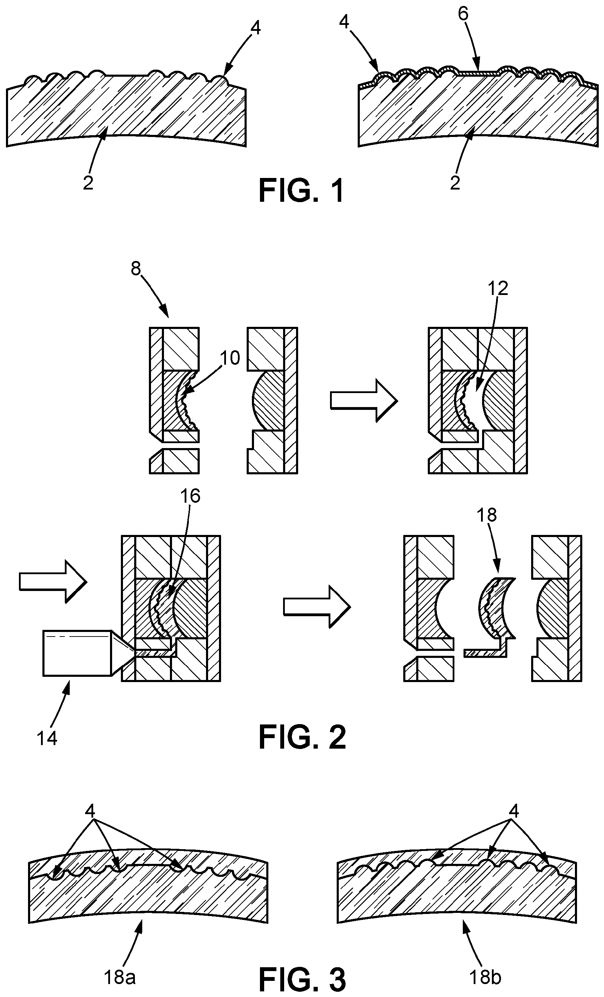

As shown in Figure 1, which depicts a section view of a lens 2 with microstructures 4, the geometric shape of the lens 2 is altered when a hard coating 6 is deposited on it to protect the lens 2 from scratches and other damages. The shape changes lead to a shift of the optical design of the lens 2. Several further design steps taking into consideration the coating process are typically needed to compensate such problem, and this is a time consuming and costly process. Moreover, the design compensation steps must be repeated for each different coating applied onto the lens 2.

Methods including lamination, overcasting, and injection overmolding are known to encapsulate the microstructures 4 inside the body of a lens to eliminate coating dependence while providing protection to the microstructures 4.

Figure 2 shows the steps of an injection overmolding process to encapsulate the microstructures 4 on the surface of the wafer layer TP_{Wafer} above disclosed.

In Figure 2 it is shown a top view of an open mold 8 wherein the wafer layer TP_{Wafer}, referenced 10 in Figure 2, such as a PC (polycarbonate) wafer, having the microstructures 4 on its concave surface, is inserted. Then, the mold 8 is closed leaving an open space 12 between the wafer layer TP_{Wafer} 10 and the mold 8. A hot melt of the second optical thermoplastic material, such as PMMA (polymethyl methacrylate), is injected into the open space 12 through a filler 14, thus creating the lens layer TP_{Lens}, referenced 16 in Figure 2. Finally, the mold 8 is opened, thus allowing obtaining a final lens 18 (a bi-layer made up of the wafer layer TP_{Wafer} 10 and the lens layer TP_{Lens} 16).

As above detailed, the injection overmolding process involves injecting a hot melt second optical thermoplastic material over the relatively cold micro-structured surface of the wafer layer TP_{Wafer}.

The microstructures 4 of the wafer layer TP_{Wafer} soften and deform under the high heat and pressure of the overmolding steps. This results in a loss of shape integrity of the microstructures 4 and in a worsening of the optical design of such microstructures 4, thus leading to a poor control of the progression of myopia.

Moreover, the first optical thermoplastic material and the second optical thermoplastic material need to be carefully selected in order to form a well-defined clear interface for good optical fidelity and lens clarity, and in order to achieve a strong bonding. The resulting final lens 18 should in fact pass subsequent known Rx processing steps without issues, therefore, the choice of the materials is particularly challenging. Very specific property relations between the two different thermoplastic materials are necessary.

Figure 3 shows a section view of two different types of final lens 18, a first final lens 18a having convex microstructures 4 and a second final lens 18b having concave microstructure 4. The encapsulated microstructures 4 must have predetermined optical powers to facilitate the peripheral defocus. To have the appropriate optical powers, it is required that a wafer layer refractive index RI_{Wafer} of the wafer layer TP_{Wafer} is different from a lens layer refractive index RI_{Lens} of the lens layer TP_{Lens}, i.e., the difference ΔRI of the two refractive index RI_{Wafer} and RI_{Lens} must be different from zero.

For myopia control, the microlens powers of the final lens 18 have to be positive to provide peripheral defocus that slows down the progression of the myopia. When ΔRI is greater than zero (i.e., RI_{Wafer} is greater than RI_{Lens}), the microstructures 4 on the wafer layer TP_{Wafer} have to be convex to have positive powers (first final lens 18a). When ΔRI is lower than 0 (i.e., RI_{Wafer} is lower than RI_{Lens}), the microstructures 4 on the wafer layer TP_{Wafer} have to be concave to have positive powers (second final lens 18b).

To maintain the shape integrity of the microstructures 4, the thermal resistance of the wafer layer TP_{Wafer} must be greater than the thermal resistance of the lens layer TP_{Lens}, to withstand the high heat and pressure of the injection overmolding process. For a thermoplastic material, its thermal resistance can be characterized by the glass transition temperature Tg: a higher glass transition temperature Tg corresponds to a greater heat resistance. Hence, the glass transition temperature *Tg_{Wafer}* of the wafer layer TP_{Wafer} has to be higher than the glass transition temperature *Tg_{Lens}* of the lens layer TP_{Lens} in order to prevent the microstructures 4 from deforming.

In general, a high index amorphous thermoplastic material has a great heat resistance owning inherently to the chemical structures. Therefore, a high glass transition temperature Tg corresponds to a high refractive index RI.

As the main body of the final lens 18 is formed by the lens layer TP_{Lens}, to reduce the overall thickness of the final lens 18 to be aesthetically pleasant and appealing to consumers, it would be preferable that the second optical thermoplastic material of the lens layer TP_{Lens} is a high index material having the lens layer refractive index RI_{Lens} higher than the wafer layer refractive index RI_{Wafer} of the wafer layer TP_{Wafer}. In such case the first optical thermoplastic material of the wafer layer TP_{Wafer} would be a low index material.

This would however imply, as above explained, that the second optical thermoplastic material of the lens layer TP_{Lens} has also a glass transition temperature *Tg_{Lens}* higher than the one *Tg_{Wafer}* of the first optical thermoplastic material of the wafer layer TP_{Wafer}.

On the other side, to preserve the shape integrity of the microstructures 4 of the wafer layer TP_{Wafer} during the subsequent injection overmolding of the second optical thermoplastic material, the heat resistance of the first optical thermoplastic material of the wafer layer TP_{Wafer} must be greater than the one of the second optical thermoplastic material being injected to encapsulate the microstructures 4.

Therefore, using a high index material as second optical thermoplastic material for the lens layer TP_{Lens} (which would be preferable to reduce the overall thickness of the final lens 18) would not work as the microstructures 4 created on the low index material of the wafer layer TP_{Wafer} would severely deform.

None of the prior art technologies provides a working solution to construct a composite lens with encapsulated microstructures wherein the lens layer TP_{Lens} is made up of a second optical thermoplastic material having a lens layer refractive index RI_{Lens} higher than the wafer layer refractive index RI_{Wafer} of the wafer layer TP_{Wafer} and wherein, at the same time, the microstructures 4 do not deform.

In fact, it is not available a thermoplastic material pair wherein the first optical thermoplastic material of the wafer layer TP_{Wafer} has a glass transition temperature higher than the one of the second optical thermoplastic material of the lens layer TP_{Lens} and, at the same time, a refractive index RI_{Wafer} lower than the one RI_{Lens} of the second optical thermoplastic material, such materials being further compatible each other to construct a two-layered composite lens.

Accordingly, there is the need to provide an innovative method for manufacturing a micro-structured optical article with a reduced overall thickness to be aesthetically pleasant and appealing to consumers and which, at the same time, maintains the shape integrity and the optical design of the microstructures it contains to better control the progression of myopia in an individual, thus overcoming the problems of the prior art.

EP 4 194 932 A1 discloses a method for manufacturing a micro-structured optical article and a micro-structured optical article thereof.

### Summary

What is provided herein is a method for manufacturing a micro-structured optical article comprising the steps of:
- providing a support layer having microstructures on a back concave surface, the support layer comprising a first optical thermoplastic material;
- depositing, on said micro-structured surface, a second optical thermoplastic material having a refractive index and a glass transition temperature lower than a respective refractive index and glass transition temperature of the first optical thermoplastic material, thus obtaining an intermediate tie-layer which encapsulates the microstructures;
- depositing, on said tie-layer, a third optical thermoplastic material having a refractive index and a glass transition temperature higher than the respective refractive index and glass transition temperature of the second optical thermoplastic material of the tie-layer, thus obtaining a body layer, the support layer, the tie-layer and the body layer forming altogether said micro-structured optical article.

In an embodiment, depositing a second optical thermoplastic material comprises performing an injection overmolding.

In an embodiment, depositing a third optical thermoplastic material comprises performing an injection overmolding.

In an embodiment, the first optical material is polycarbonate, aromatic thermoplastic polyurethane, aromatic polyamide, polysulfone, polyphenylsulfone, polyetherimide, a copolymer thereof, or a derivative or mixture thereof.

In an embodiment, the second optical material is polymethyl methacrylate, methyl methacrylate copolymer, aliphatic thermoplastic polyurethane, aliphatic polyamide, isosorbide copolycarbonate, polyester, a copolymer thereof, or a derivative or mixture thereof.

In an embodiment, the third optical material is polycarbonate, aromatic thermoplastic polyurethane, aromatic polyamide, polysulfone, polyphenylsulfone, polyetherimide, a copolymer thereof, or a derivative or mixture thereof.

In an embodiment, the third optical material is the same as the first optical material.

In an embodiment, the third optical material is different from the first optical material.

In an embodiment, the thickness of the support layer is comprised between 0.25mm and 1.25mm, and preferably between 0.40mm and 1.0mm.

In an embodiment, the thickness of the tie-layer is comprised between 0.25mm and 1.25mm, and preferably between 0.40mm and 1.0mm.

In an embodiment, the support layer and the tie-layer form a two-layered wafer whose thickness is comprised between 0.50mm and 2.0mm, and preferably between 0.8mm and 1.50mm.

In an embodiment, the thickness of the micro-structured optical article is comprised between 0.75mm to 15mm and above.

Also provided herein is a micro-structured optical article comprising a finished lens, a semi-finished lens, a wafer or a film.

The aforesaid micro-structured optical article can be designed to control myopia of an individual.

### Description of the drawings

Further characteristics and advantages of the present invention will become apparent from the following description, provided merely by way of a non-limiting example, with reference to the attached drawings, in which:
Figure 1 depicts a section view of a lens with microstructures;
Figure 2 shows the steps of an injection overmolding process to encapsulate microstructures on a surface of a wafer layer;
Figure 3 shows a section view of two different types of final lens;
Figure 4 shows the step of a method for manufacturing a micro-structured optical article according to an example of the present invention;
Figure 5 is a bottom view picture of a support layer according to an example of the invention;
Figure 6 shows an image of a two-layered wafer according to an example of the invention; and
Figure 7 shows an image of a micro-structured optical article according to an example of the invention.

### Detailed description of embodiments

In the description which follows, the drawing figures are not necessarily to scale, and certain features may be shown in generalized or schematic form in the interest of clarity and conciseness or for informational purposes. Embodiments discussed herein are merely representative and do not limit the scope of the invention. It will also be obvious to one skilled in the art that all the technical features that are defined relative to a process can be transposed, individually or in combination, to a device and conversely, all the technical features relative to a device can be transposed, individually or in combination, to a process. To avoid unnecessary details for practicing the invention, the description may omit certain information already known to those skilled in the art.

The method for manufacturing a micro-structured optical article according to the present invention is based on the use of an intermediate tie-layer between the wafer layer TP_{Wafer} and the lens layer TP_{Lens} above disclosed, to produce a three-layered composite optical article which allows a successful replication and encapsulation of the microstructures 4 while maintaining, at the same time, a strong bonding between the two main layers, i.e. the wafer layer TP_{Wafer} and the lens layer TP_{Lens}.

Therefore, according to the method of the present invention, a three-layered optical article is obtained comprising a low index and low heat resistance tie-layer placed between the micro-structured wafer layer TP_{Wafer} and the lens layer TP_{Lens} representing the main body of the lens, to encapsulate the microstructures 4 of the wafer layer TP_{Wafer} and to facilitate the bonding between the wafer layer TP_{Wafer} and the lens layer TP_{Lens}.

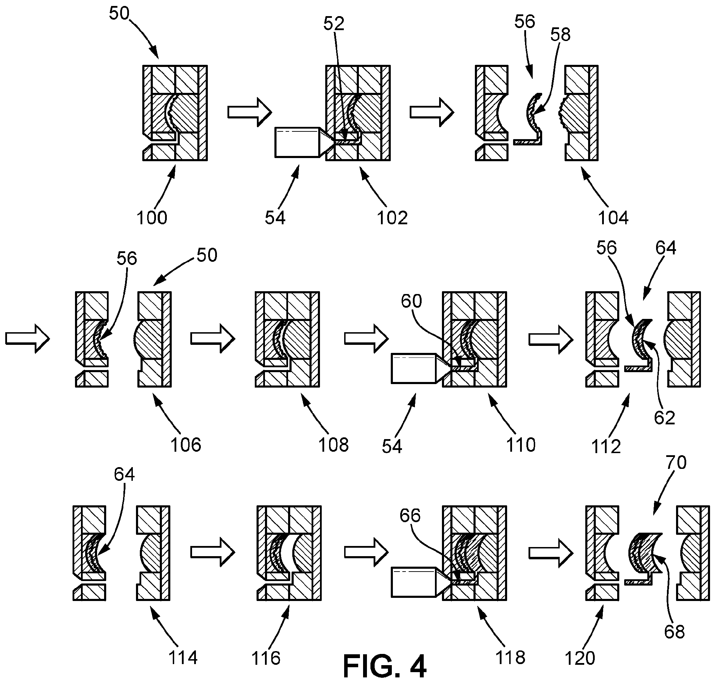

Figure 4 shows the step of a method for manufacturing a micro-structured optical article according to an example of the present invention.

In a first step 100, a mold 50 is provided and in a next step 102 a high index and high heat resistance first optical thermoplastic material 52 is injected into the mold 50 through a filler 54.

In an embodiment, the first optical thermoplastic material 52 is polycarbonate (PC), aromatic thermoplastic polyurethane, aromatic polyamide, polysulfone, polyphenylsulfone, polyetherimide, a copolymer thereof, or a derivative or mixture thereof.

The aforementioned polycarbonate can be the most common bisphenol A (BPA) polycarbonate or polycarbonates derived from other bisphenols (e.g. bisphenol AP, bisphenol C, bisphenol TMC).

In a next step 104, the mold 50 is opened and a support (wafer) layer 56 (corresponding to the wafer layer TP_{Wafer} 10 above disclosed) having microstructures 58 on the back concave surface is obtained. The microstructures 58 are created in a manner per se known.

Considering a desired final thickness of the resulting optical article to obtain, preferably a lens, for myopia control, the thickness of the micro-structured support layer 56 is comprised between 0.25mm and 1.25mm, and preferably between 0.40mm and 1.0mm.

Once the micro-structured support layer 56 is obtained, in a next step 106, the support layer 56 is re-inserted into the mold 50, which is then closed in step 108. In step 110 a second optical thermoplastic material 60 with a refractive index RI_{Tie} and a glass transition temperature *Tg_{Tie}* lower than a respective refractive index RI_{Wafer} and glass transition temperature *Tg_{Wafer}* of the first optical thermoplastic material 52 is deposited, preferably injection-overmolded, on the support layer 56 (on the concave micro-structured surface of the support layer 56), through the filler 54, thus forming an intermediate tie-layer 62.

In an embodiment, the second optical thermoplastic material 60 is polymethyl methacrylate (PMMA), methyl methacrylate copolymer, aliphatic thermoplastic polyurethane, aliphatic polyamide, isosorbide copolycarbonate (e.g. Durabio^{™} from Mitsubishi Chemical Performance Polymer), polyester, a copolymer thereof, or a derivative or mixture thereof.

The tie-layer 62 encapsulates the microstructures 58 and forms, together with the support layer 56, a smooth two-layered wafer 64 once the mold 50 is opened in next step 112.

As the second optical thermoplastic material 60 has a glass transition temperature *Tg_{Tie}* lower than the glass transition temperature *Tg_{Wafer}* of the first optical thermoplastic material 52, the shape integrity of the microstructures 58 is preserved.

Considering the desired final thickness of the resulting optical article to obtain, the thickness of the tie-layer 62 is comprised between 0.25mm and 1.25mm, and preferably between 0.40mm and 1.0mm.

For practical purposes, the combined thickness of the two-layered wafer 64 is comprised between 0.50mm and 2.0mm, and preferably between 0.8mm and 1.50mm.

Once the two-layered wafer 64 is obtained, in a next step 114, the two-layered wafer 64 is re-inserted into the mold 50, which is closed in step 116. In step 118, a third optical thermoplastic material 66 with a refractive index RI_{Lens} and a glass transition temperature *Tg_{Lens}* higher than the respective refractive index RI_{Tie} and glass transition temperature *Tg_{Tie}* of the second optical thermoplastic material 60 of the tie-layer 62 is deposited, preferably injection-overmolded, on the tie-layer 62, through the filler 54, thus forming a body layer 68 (corresponding to the lens layer TP_{Lens} 16 above disclosed).

In an embodiment, the third optical material 66 is polycarbonate (PC), aromatic thermoplastic polyurethane, aromatic polyamide, polysulfone, polyphenylsulfone, polyetherimide, a copolymer thereof, or a derivative or mixture thereof.

The aforementioned polycarbonate can be the most common bisphenol A (BPA) polycarbonate or polycarbonates derived from other bisphenols (e.g. bisphenol AP, bisphenol C, bisphenol TMC).

The third optical thermoplastic material 66 may be the same of the first optical thermoplastic material 52 or may be different.

Once the mold 50 is opened in next step 120, a micro-structured optical article 70, i.e., a final three-layered optical article, is obtained.

The support layer 56, the tie-layer 62 and the body layer 68 form altogether the micro-structured optical article 70.

Since the microstructures 58 are already encapsulated in the two-layered wafer 64, this final overmolding step 118 does not alter their shapes.

The thickness of the micro-structured optical article 70 is comprised between 0.75mm to 15mm and above.

The micro-structured optical article 70 can be a lens, either a finished lens or a semi-finished (SF) lens, a wafer or a film.

In an example according to the present invention, encapsulation of microstructures 58 on a polycarbonate (PC) support layer 56 with a polymethyl methacrylate (PMMA) tie-layer 62 to form a PC/PMMA/PC lens (the micro-structured optical article) 70 has been realized as above disclosed.

A plano PC support layer 56 having diameter of 76mm and a center thickness of 0.60mm with convex bifocal microstructures 58 on the concave surface has been produced in a first step, in a known manner, with a Fanuc α-S110i injection molding machine using a Sabic Lexan^{®} OQ1022 polycarbonate resin, having a refractive index of 1.586 and a glass transition temperature Tg of about 145°C. The injection molding parameters have been set to the followings: melt temperature 610°F, mold temperature 280°F, injection speed 220mm/s and packing pressure 13,500psi.

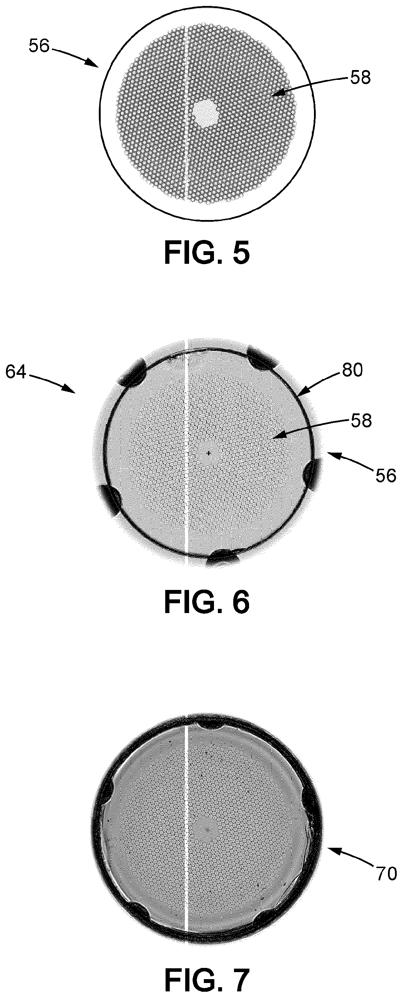

The bifocal microstructures 58 have been arranged in a contiguous hexagonal array as shown in Figure 5, which is a bottom view picture of the support layer 56.

In a second step, encapsulation of the microstructures 58 obtained in the first step has been performed, in a known manner, with a Nissei FN4000 injection molding machine using Roehm America ACRYLITE^{®} hw55 PMMA copolymer having a refractive index of 1.510 and a glass transition temperature *Tg* of 120°C as tie-layer 62, to produce a PC/PMMA two-layered wafer 64. The melt and mold temperatures for the injection overmolding process have been set at 480°F and 215°F, respectively. The injection speed was 99% and the packing pressure was 48%. The thickness of the resulting PC/PMMA two-layered wafer 64 was 1.15mm with the PMMA tie-layer 62 being 0.55mm.

The microstructures 58 have been characterized using a known imaging device and Figure 6 shows an image of the two-layered wafer 64 obtained in the second step, which shows very well-defined boundaries between the microstructures 58 and a base 80 of the support layer 56, thus indicating that the shape integrity of the microstructures 58 has been preserved.

In a third step, overmolding of a body layer 68 on the concave surface of the two-layered wafer 64 produced in the second step has been performed, thus obtaining a PC/PMMA/PC lens 70, in particular a semi-finished (SF) lens. This overmolding process has been carried out, in a known manner, with a Nissei FN4000 injection molding machine using a Teijin Panlite PC resin having a refractive index of 1.586 and a glass transition temperature *Tg* of about 147°C. The melt and mold temperatures for the injection overmolding process have been set at 510°F and 250°F, respectively. The injection speed was 12% and the packing pressure was 40%. The center thickness of the resulting PC/PMMA/PC lens 70 was 10mm.

The microstructures 58 have been characterized using a known imaging device and Figure 7 shows an image of the final PC/PMMA/PC lens 70 (the micro-structured optical article) obtained in the third step, which shows very well-defined boundaries between the microstructures 58, thus indicating that the shape integrity of the microstructures 58 has been preserved.

Finally, the PC/PMMA/PC lens 70 has been treated through Rx surfacing/edging processes without resulting in layer separation, which is an indication of a strong bonding between the PC and the PMMA.

Some of the advantages of present invention include:
- a high index micro-structured optical article 70 with encapsulated microstructures 58 for myopia control is obtained;
- the solution is applicable for the encapsulation of a variety of microstructures 58 including unifocal and bifocal microlenses, pi-Fresnel microstructures, diffractive micropillars, etc. in different arrangements such as concentric rings or a contiguous hexagonal array; and
- the micro-structured article 70 can be used to produce a photochromic myopia control product as it is most likely compatible with existing processes for producing photochromic PC lenses.

Clearly, the principle of the invention remaining the same, the embodiments and details of production can be varied considerably from what has been described and illustrated purely by way of non-limiting example, without departing from the scope of protection of the present as defined in the attached claims.

## Claims

1. Method for manufacturing a micro-structured optical article (70) comprising the steps of:
- providing a support layer (56) having microstructures (58) on a back concave surface, the support layer (56) comprising a first optical thermoplastic material (52);
- depositing, on said micro-structured surface, a second optical thermoplastic material (60) having a refractive index (RI_{Tie}) and a glass transition temperature (*Tg_{Tie}*) lower than a respective refractive index (RI_{Wafer}) and glass transition temperature (*Tg_{Wafer}*) of the first optical thermoplastic material (52), thus obtaining an intermediate tie-layer (62) which encapsulates the microstructures (58);
- depositing, on said tie-layer (62), a third optical thermoplastic material (66) having a refractive index (RI_{Lens}) and a glass transition temperature (*Tg_{Lens}*) higher than the respective refractive index (RI_{Tie}) and glass transition temperature (*Tg_{Tie}*) of the second optical thermoplastic material (60) of the tie-layer (62), thus obtaining a body layer (68), the support layer (56), the tie-layer (62) and the body layer (68) forming altogether said micro-structured optical article (70).

2. The method of claim 1, wherein depositing a second optical thermoplastic material (60) comprises performing an injection overmolding.

3. The method of claim 1 or 2, wherein depositing a third optical thermoplastic material (66) comprises performing an injection overmolding.

4. The method of any of the above claims, wherein the first optical material (52) is polycarbonate, aromatic thermoplastic polyurethane, aromatic polyamide, polysulfone, polyphenylsulfone, polyetherimide, a copolymer thereof, or a derivative or mixture thereof.

5. The method of claims any of the above claims, wherein the second optical material (60) is polymethyl methacrylate, methyl methacrylate copolymer, aliphatic thermoplastic polyurethane, aliphatic polyamide, isosorbide copolycarbonate, polyester, a copolymer thereof, or a derivative or mixture thereof.

6. The method of any of the above claims, wherein the third optical material (66) is polycarbonate, aromatic thermoplastic polyurethane, aromatic polyamide, polysulfone, polyphenylsulfone, polyetherimide, a copolymer thereof, or a derivative or mixture thereof.

7. The method of any of the claims 1 to 6, wherein the third optical material (66) is the same as the first optical material (52).

8. The method of any of the claims 1 to 6, wherein the third optical material (66) is different from the first optical material (52).

9. The method of any of the above claims, wherein the thickness of the support layer (56) is comprised between 0.25mm and 1.25mm, and preferably between 0.40mm and 1.0mm.

10. The method of any of the above claims, wherein the thickness of the tie-layer (62) is comprised between 0.25mm and 1.25mm, and preferably between 0.40mm and 1.0mm.

11. The method of any of the above claims, wherein the support layer (56) and the tie-layer (62) form a two-layered wafer (64) whose thickness is comprised between 0.50mm and 2.0mm, and preferably between 0.8mm and 1.50mm.

12. The method of any of the above claims, wherein the thickness of the micro-structured optical article (70) is comprised between 0.75mm to 15mm and above.

13. A micro-structured optical article manufactured according to a method for manufacturing a micro-structured optical article according to any of the claims 1 to 12.

14. The micro-structured optical article of claim 13, wherein the micro-structured optical article comprises at least one of a finished lens, a semi-finished lens, a wafer or a film.

15. The micro-structured optical article of claim 13, designed for controlling myopia of an individual.

## Patentansprüche

1. Verfahren zur Fertigung eines mikrostrukturierten optischen Artikels (70), umfassend die Schritte:
- Bereitstellen einer Trägerschicht (56) mit Mikrostrukturen (58) auf einer hinteren konkaven Oberfläche, wobei die Trägerschicht (56) ein erstes optisches thermoplastisches Material (52) umfasst;
- Abscheiden eines zweiten optischen thermoplastischen Materials (60) mit einem Brechungsindex (RI_{Haftvermittler}) und einer Glasübergangstemperatur (Tg_{Haftvermittler}), die niedriger als ein jeweiliger Brechungsindex (RI_{Wafer}) und eine Glasübergangstemperatur (Tg_{Wafer}) des ersten optischen thermoplastischen Materials (52) sind, auf der mikrostrukturierten Oberfläche, wodurch eine Haftvermittlerzwischenschicht (62) erhalten wird, die die Mikrostrukturen (58) einkapselt;
- Abscheiden eines dritten optischen thermoplastischen Materials (66) mit einem Brechungsindex (RI_{Linse}) und einer Glasübergangstemperatur (Tg_{Linse}), die höher als der jeweilige Brechungsindex (RI_{Haftvermittler}) und die Glasübergangstemperatur (Tg_{Haftvermittler}) des zweiten optischen thermoplastischen Materials (60) der Haftvermittlerschicht (62) ist, auf der Haftvermittlerschicht (62), wodurch eine Körperschicht (68), die Trägerschicht (56), die Haftvermittlerschicht (62) und die Körperschicht (68) erhalten werden, die insgesamt den mikrostrukturierten optischen Artikel (70) bilden.

2. Verfahren nach Anspruch 1, wobei Abscheiden eines zweiten optischen thermoplastischen Materials (60) Durchführen einer Spritzguss-Überformung umfasst.

3. Verfahren nach Anspruch 1 oder 2, wobei Abscheiden eines dritten optischen thermoplastischen Materials (66) Durchführen einer Spritzguss-Überformung umfasst.

4. Verfahren nach einem der vorstehenden Ansprüche, wobei das erste optische Material (52) Polycarbonat, aromatisches thermoplastisches Polyurethan, aromatisches Polyamid, Polysulfon, Polyphenylsulfon, Polyetherimid, ein Copolymer davon oder ein Derivat oder eine Mischung davon ist.

5. Verfahren nach einem der vorhergehenden Ansprüche, wobei das zweite optische Material (60) Polymethylmethacrylat, Methylmethacrylat-Copolymer, aliphatisches thermoplastisches Polyurethan, aliphatisches Polyamid, Isosorbid-Copolycarbonat, Polyester, ein Copolymer davon oder ein Derivat oder eine Mischung davon ist.

6. Verfahren nach einem der vorstehenden Ansprüche, wobei das dritte optische Material (66) Polycarbonat, aromatisches thermoplastisches Polyurethan, aromatisches Polyamid, Polysulfon, Polyphenylsulfon, Polyetherimid, ein Copolymer davon oder ein Derivat oder eine Mischung davon ist.

7. Verfahren nach einem der Ansprüche 1 bis 6, wobei das dritte optische Material (66) dasselbe wie das erste optische Material (52) ist.

8. Verfahren nach einem der Ansprüche 1 bis 6, wobei sich das dritte optische Material (66) von dem ersten optischen Material (52) unterscheidet.

9. Verfahren nach einem der vorhergehenden Ansprüche, wobei die Dicke der Trägerschicht (56) zwischen 0,25 mm und 1,25 mm und vorzugsweise zwischen 0,40 mm und 1,0 mm liegt.

10. Verfahren nach einem der vorhergehenden Ansprüche, wobei die Dicke der Haftvermittlerschicht (62) zwischen 0,25 mm und 1,25 mm und vorzugsweise zwischen 0,40 mm und 1,0 mm liegt.

11. Verfahren nach einem der obigen Ansprüche, wobei die Trägerschicht (56) und die Haftvermittlerschicht (62) einen zweischichtigen Wafer (64) bilden, dessen Dicke zwischen 0,50 mm und 2,0 mm und vorzugsweise zwischen 0,8 mm und 1,50 mm liegt.

12. Verfahren nach einem der obigen Ansprüche, wobei die Dicke des mikrostrukturierten optischen Artikels (70) zwischen 0,75 mm und 15 mm und darüber liegt.

13. Mikrostrukturierter optischer Artikel, der gemäß einem Verfahren zur Fertigung eines mikrostrukturierten optischen Artikels nach einem der Ansprüche 1 bis 12 hergestellt ist.

14. Mikrostrukturierter optischer Artikel nach Anspruch 13, wobei der mikrostrukturierte optische Artikel mindestens eines von einer fertigen Linse, einer halbfertigen Linse, einem Wafer oder einem Film umfasst.

15. Mikrostrukturierter optischer Artikel nach Anspruch 13, der zur Bekämpfung der Myopie eines Individuums konzipiert ist.

## Revendications

1. Procédé de fabrication d'un article optique micro-structuré (70) comprenant les étapes de :
- la fourniture d'une couche de support (56) ayant des microstructures (58) sur une surface arrière concave, la couche de support (56) comprenant un premier matériau thermoplastique optique (52) ;
- le dépôt sur ladite surface micro-structurée d'un deuxième matériau thermoplastique optique (60) ayant un indice de réfraction (RI_{Tie}) et une température de transition vitreuse (Tg_{Tie}) inférieures à un indice de réfraction (RI_{Wafer}) et une température de transition vitreuse (Tg_{Wafer}) respectifs du premier matériau thermoplastique optique (52) obtenant ainsi une couche de liaison intermédiaire (62) qui encapsule les microstructures (58) ;
- le dépôt sur ladite couche de liaison (62) d'un troisième matériau thermoplastique optique (66) ayant un indice de réfraction (RI_{Lens}) et une température de transition vitreuse (Tg_{Lens}) supérieures aux indice de réfraction (RI_{Tie}) et température de transition vitreuse (Tg_{Tie}) respectifs du deuxième matériau thermoplastique optique (60) de la couche de liaison (62), obtenant ainsi une couche de corps (68), la couche de support (56), la couche de liaison (62) et la couche de corps (68) formant ensemble ledit article optique micro-structuré (70).

2. Procédé selon la revendication 1, le dépôt d'un deuxième matériau thermoplastique optique (60) comprenant la réalisation d'un surmoulage par injection.

3. Procédé selon la revendication 1 ou 2, le dépôt d'un troisième matériau thermoplastique optique (66) comprenant la réalisation d'un surmoulage par injection.

4. Procédé selon l'une quelconque des revendications ci-dessus, le premier matériau optique (52) étant un polycarbonate, un polyuréthane thermoplastique aromatique, un polyamide aromatique, une polysulfone, une polyphénylsulfone, un polyétherimide, un copolymère de ceux-ci, ou un dérivé ou un mélange de ceux-ci.

5. Procédé selon l'une quelconque des revendications précédentes, le deuxième matériau optique (60) étant le poly(méthacrylate de méthyle), le copolymère de méthacrylate de méthyle, le polyuréthane thermoplastique aliphatique, le polyamide aliphatique, le copolycarbonate d'isosorbide, le polyester, un copolymère de ceux-ci, ou un dérivé ou un mélange de ceux-ci.

6. Procédé selon l'une quelconque des revendications ci-dessus, le troisième matériau optique (66) étant un polycarbonate, un polyuréthane thermoplastique aromatique, un polyamide aromatique, une polysulfone, une polyphénylsulfone, un polyétherimide, un copolymère de ceux-ci, ou un dérivé ou un mélange de ceux-ci.

7. Procédé selon l'une quelconque des revendications 1 à 6, le troisième matériau optique (66) étant le même que le premier matériau optique (52).

8. Procédé selon l'une quelconque des revendications 1 à 6, le troisième matériau optique (66) étant différent du premier matériau optique (52).

9. Procédé selon l'une quelconque des revendications précédentes, l'épaisseur de la couche de support (56) étant comprise entre 0,25 mm et 1,25 mm, et de préférence entre 0,40 mm et 1,0 mm.

10. Procédé selon l'une quelconque des revendications précédentes, l'épaisseur de la couche de liaison (62) étant comprise entre 0,25 mm et 1,25 mm, et de préférence entre 0,40 mm et 1,0 mm.

11. Procédé selon l'une quelconque des revendications précédentes, la couche de support (56) et la couche de liaison (62) formant une tranche à deux couches (64) dont l'épaisseur est comprise entre 0,50 mm et 2,0 mm, et de préférence entre 0,8 mm et 1,50 mm.

12. Procédé selon l'une quelconque des revendications ci-dessus, l'épaisseur de l'article optique micro-structuré (70) étant comprise entre 0,75 mm et 15 mm et plus.

13. Article optique micro-structuré fabriqué selon un procédé de fabrication d'un article optique micro-structuré selon l'une quelconque des revendications 1 à 12.

14. Article optique micro-structuré selon la revendication 13, l'article optique micro-structuré comprenant au moins un élément parmi une lentille finie, une lentille semi-finie, une tranche ou un film.

15. Article optique micro-structuré selon la revendication 13, conçu pour contrôler la myopie d'un individu.
